# EUROPÄISCHE PATENTANMELDUNG

(11) **EP 0 916 944 A2**
(43) Veröffentlichungstag der Anmeldung: **19.05.1999**
(21) Anmeldenummer: 98121713.6
(22) Anmeldetag: 13.11.1998
(51) Int. Cl.: G01N 29/28

(54) **Vorrichtung zur Ultraschallprüfung an Probekörpern**

(30) Priorität: 13.11.1997 DE 19750353
(71) Anmelder: Deutsches Zentrum für Luft- und Raumfahrt e.V, 53127 Bonn (DE)
(72) Erfinder: Hillger, Wolfgang Dr., 38110 Braunschweig (DE); Friederichs, Bernd, 38302 Wolfenbüttel (DE)
(74) Vertreter: Einsel, Martin, Dipl.-Phys.

(57) **Zusammenfassung**

Bei einer Vorrichtung zur Ultraschallprüfung an Probekörpern mit einem Prüfkopf ist der Prüfkopf (40) in einem Adapterelement (20) angeordnet, das mit einer ruhenden Flüssigkeit gefüllt ist. Das Adapterelement ist über einen Flüssigkeitsfilm (3) an den Probekörper (2) ankoppelbar.

## Beschreibung

Die Erfindung betrifft eine Vorrichtung zur Ultraschallprüfung an Probekörpern mit einem Prüfkopf.

Die Ultraschallprüftechnik ist ein bekanntes und verbreitetes Verfahren zur zerstörungsfreien Werkstoffprüfung und medizinischen Diagnostik. Bei diesem Verfahren werden akustische Wellen in den zu untersuchenden Prüfgegenstand eingeschallt. An allen sprunghaften Impedanzänderungen treten dadurch Reflexionen der Wellen auf. Durch diese Reflexionen lassen sich beispielsweise Fehlstellen im Prüfgegenstand nachweisen. Für die Erzeugung und für den Empfang von Ultraschallwellen mit Frequenzen von etwa 1 bis 20 MHz werden bei bekannten Meßverfahren Prüfköpfe, welche beispielsweise piezoelektrische Kristalle enthalten, verwendet.

Bekannt ist, daß bei der Aufnahme von Ultraschalldaten für eine bildgebende Auswertung grundlegende Phänomene der Schallausbreitung beachtet werden müssen. Danach breiten sich Schallwellen in verschiedenen Werkstoffen mit charakteristischer, konstanter und frequenzunabhängiger Schallgeschwindigkeit c aus. Die Ultraschallwellenlänge λ ergibt sich danach aus dem Quotienten aus der Schallgeschwindigkeit c und der Frequenz f. Die Amplitude des Ultraschallimpulses sinkt mit wachsendem Abstand von dem zu messenden Prüfgegenstand, da sich der Schall in einem immer größer werdenden Sektor verteilt. Dabei auftretende Divergenzverluste sind der Schallgeschwindigkeit c proportional und der Prüffrequenz f umgekehrt proportional. Flüssigkeiten als Vorlaufstrecke schwächen die Schallwellen größtenteils durch Absorption, also durch Energieumwandlung in Wärme. Diese Verluste wachsen quadratisch mit der Prüffrequenz f. Ist der Prüfgegenstand ein fester Werkstoff, werden die Schallwellen durch Streuung im Gefüge und Absorption geschwächt. Ist der Prüfgegenstand hingegen aus einem polykristallinen oder mehrphasigen Werkstoff hergestellt, überwiegen die Streuverluste. Diese Verluste wachsen zumeist mit einer höheren Potenz der Prüffrequenz f. Ist der Prüfgegenstand aus einem amorphen Werkstoff hergestellt, überwiegen die Absorptionsverluste, welche linear mit der Prüffrequenz f anwachsen. An jeweiligen Grenzflächen werden die Schallwellen nur teilweise durchgelassen, wohingegen der übrige Teil reflektiert wird. Aus diesen Überlegungen ergibt sich, daß das Schallbündel in dem zu prüfenden Bereich möglichst schmal und die Ultraschallwellenlänge λ möglichst klein sein soll. Es sollten daher grundsätzlich möglichst hohe Prüffrequenzen f verwendet werden. Die Ausbildung eines fokussierten Schallfeldes hängt dabei von der Prüffrequenz f und der Schallgeschwindigkeit c ab. Je höher nämlich die Prüffrequenz f gewählt wird, desto schmaler ist das Schallbündel im Fokuspunkt. Je höher hingegen die Schallgeschwindigkeit c gewählt wird, desto kürzer ist der Fokusbereich bei gleichbleibender Prüfkopfabmessung. Es sollte daher lediglich so stark fokussiert werden, daß der Fokusbereich den zu prüfenden Bereich noch vollständig erfaßt.

Um eine optimale Schallübertragung zu gewähren, werden die Prüfköpfe direkt an den Prüfgegenstand oder Probekörper angekoppelt. Abhängig von der jeweiligen Prüfaufgabe erfolgt die Ankopplung dabei im Direktkontakt mit einer Paste zwischen dem Prüfkopf und dem Probekörper oder über Wasser. In letzterem Fall wird häufig eine Tauchtechnik verwendet. Bei der automatischen Tauchtechnikprüfung wird der Prüfkopf mit einen Manipulationssystem mäanderförmig über dem Probekörper entlanggeführt.

Aus der DE 196 10 641 C1 ist eine Prüfvorrichtung bekannt, bei der ohne Adapter aus möglichst geringer Entfernung die Schallstrahlen in das Werkstück abgegeben werden. Das Werkstück muß sehr genau in seinen Konturen bekannt sein und darf Krümmungen nur in einer Richtung aufweisen, die durch eine komplizierte Walzenmechanik ausgeglichen werden.

Da während des Abrasterns eine gleichbleibende Kopplung erforderlich ist, wird die Prüfung des Probekörpers häufig mittels der Tauchtechnik durchgeführt, wobei sich dabei Prüfkopf und Probekörper im Wasser befinden. Gerade bei großen Probekörpern jedoch, beispielsweise bei Tragflächen von Flugzeugen oder bei Prüfungen vor Ort kann lediglich eine lokale Ankopplung mit Wasser erfolgen. Aus dem Stand der Technik sind daher einige Vorrichtungen zur Ultraschallprüfung an Probekörpern mit einem Prüfkopf bekannt, welche lokal zur Prüfung angekoppelt werden. Aus der DE 42 37 378 C1 und ähnlich aus dem Berichtsband 37, Teil 2, der Deutschen Gesellschaft für Zerstörungsfreie Prüfung e. V., aus dem Jahr 1993, Seite 865 bis 872, ist ein "VACUTRAK" - Ultraschallankoppelsystem bekannt, bei dem sich die Koppelflüssigkeit, insbesondere Wasser, in einem geschlossenen Kreislauf befindet. Die Koppelflüssigkeit wird dabei mit Unterdruck gefördert, wodurch keine Flüssigkeit am Baute herunterläuft. Bei dieser bekannten Vorrichtung wird der Prüfkopf mit einer Feder bei einem Plexiglasvorlauf an das zu prüfende Bauteil, also an den Probekörper, angedrückt. Zwischen dem zu prüfenden Bauteil und dem Plexiglasvorlauf verläuft ein Koppelspalt, welcher mit Flüssigkeit gefüllt ist. Aufgrund der Formgebung des Plexiglasvorlaufes eignet sich diese Vorrichtung nur für ebene, nicht jedoch für fokussierte Prüfköpfe. Derartige fokussierte Prüfköpfe weisen vor dem eigentlichen Schwingerelement eine akustische Linse auf, die die Schallintensität lokal erhöht und dadurch die Empfindlichkeit im Fokusbereich gegenüber kleineren Fehlern wesentlich vergrößert. Die Fokussierung wird dabei durch eine gekrümmte Oberfläche am Schallaustritt des Prüfkopfes erzielt. Problematisch ist auch die Neigung zur Bildung von Luftblasen, die die Prüfmöglichkeiten einschränkt und teilweise verhindert bzw. behindert.

Bei einer Ultraschallprüfung in Tauchtechnik kann durch Ändern der Wasservorlaufstrecke der Fokusbereich in das Bauteil hinein verlegt werden. Ein solches Vorgehen ist aus der Richtlinie US2 der deutschen Gesellschaft für Zerstörungsfreie Prüfung e. V., Seite 13/14 bekannt. Im Unterschied zu dem im vorstehenden beschriebenen System mit Plexiglasvorlauf entfällt dieser bei einer Ankopplung mit Wasserumlaufsystem. Dabei können jedoch leicht unter dem Prüfkopf mit gekrümmter Außenfläche sich Luftblasen festsetzen und den Prüfvorgang stark beeinträchtigen oder gar unmöglich machen.

Aus der JP-A-158 347 A ist eine weitere Ausführung einer Ultraschallprüfeinrichtung bekannt, die mit einem sehr breiten, zur Luftblasenbildung neigenden Wasserspalt und ohne Kontakt zum Probekörper arbeitet. Ein Wasserumlaufsystem ist nicht vorgesehen, das Wasser fließt vom Meßbereich in den Außenraum ab.

Der Erfindung liegt daher die Aufgabe zugrunde, eine Vorrichtung zur Ultraschallprüfung an Probekörpern mit einem Prüfkopf zu schaffen, mittels derer eine lokale, reproduzierbare Ankopplung des Prüfkopfes an den entsprechenden Probekörper erfolgen kann und sich keine die Prüfung beeinträchtigenden Luftblasen unter dem Prüfkopf festsetzen.

Die Aufgabe wird durch eine Vorrichtung zur Ultraschallprüfung an Probekörpern mit einem Prüfkopf gelöst, bei der der Prüfkopf in einem Adapterelement angeordnet ist, das mit einer ruhenden Flüssigkeit gefüllt und über einen Flüssigkeitsfilm an den Probekörper ankoppelbar ist. Weiterbildungen der Erfindungen sind in den Unteransprüchen definiert.

Problematisch gerade bei der Ultraschallprüfung von Gebrauchsteilen auf Gebrauchsspuren, beispielsweise auf beginnende Risse oder Rißansätze bei Tragflügeln, ist stets, daß diese Risse tendentiell senkrecht zur Oberfläche verlaufen, also parallel zur Einstrahlungsrichtung. Eine Reflektion findet also praktisch nicht statt bzw. ist nur sehr schwer festzustellen.

Hier hilft eine besonders bevorzugte Ausführungsform der Erfindung. Sie zeichnet sich dadurch aus, daß das Adapterelement (20) so ausgebildet ist, daß die Schallabstrahlung in einem von 90°-(Senkrecht-)Einstrahlung abweichenden Winkel in den Probekörper erfolgt.

Durch Schrägeinstrahlung bzw. -stellung kann eine Wellenumwandlung, z. B. von Longitundinalwellen zu Transversalwellen durchgeführt werden. Durch diese bevorzugte Ausführungsform der Erfindung wird eine Modenumwandlung durchgeführt, wobei z. B. Transversalwellen in Aluminum erzeugt werden können. Die Transversalwellen können beispielsweise zur Rißanzeige verwendet werden.

Die Erzeugung eines dünnen Wasserfilms zur akustischen Ankopplung an das Prüfstück wird bevorzugt dadurch erreicht, daß die Zufuhr der Flüssigkeit zum Flüssigkeitsfilm über eine den Einstrahlbereich ringförmig umgehende Leitung mit mehreren Düsen erfolgt. Insbesondere ist es bevorzugt, wenn die ringförmige Leitung mindestens vier symmetrisch angeordnete Düsen aufweist.

Durch eine im Grundkörper eingebaute Ringdüse mit mehreren Öffnungen werden dünne Wasserstrahlen aus mehreren Richtungen an die Kontaktplatte gesprüht. Dadurch wird eine reproduzierbare Ankopplung auch beim bidirektionalen Abrastern ermöglicht. Es entsteht also eine ringförmige Leitung, die aus mehreren Richtungen Wasser in den relevanten Bereich fördert und so ein Aufrechterhalten des Wasserfilms auch bei Bewegung der Prüfeinrichtung sicherstellt.

Das Adapterelement weist besonders bevorzugt eine im wesentlichen ebene stirnseitige Ankoppelfäche auf. Es wird mit der ebenen Fläche über den Koppelmittelfilm an den zu prüfenden Probekörper akustisch angekoppelt. Der Schallaustritt der Vorrichtung ist gekrümmt. Die Ankoppelfläche des Adapterelementes weist zum zu prüfenden Probekörper hin und verhält sich daher wie ein nicht fokussierter Prüfkopf mit ebenem Schallaustritt. Die Wandung des Adapterelementes ist zumindest in diesem Bereich aus einem durchsichtigen Material, insbesondere Plexiglas gefertigt.

Sehr vorteilhaft wird es möglich, auch ohne ein Tauchbecken fokussierte Prüfköpfe zu verwenden unter gleichzeitigem Erzielen einer hohen Reproduzierbarkeit der Ankopplung.

Alternativ kann vorzugsweise die Ankoppelfläche einen Krümmungsradius aufweisen, welcher im wesentlichen dem des Prüfkörpers angepaßt ist. Dadurch lagert das Adapterelement gleichmäßig an dem zu prüfenden Probekörper bzw. dessen Oberfläche an.

Um auch gekrümmte Oberflächen optimal nachfahren zu können, wobei Prüfkopf und Adapterelement unabhängig, satt an der zu prüfenden Oberfläche anliegen, ist besonders bevorzugt eine mehrfachgelenkige Befestigungseinrichtung vorgesehen. Diese kann eine kardanische Befestigungseinrichtung sein. Sie ist zwischen Vorrichtung und einem Manipulationssystem zum Manipulieren bzw. Bewegen der Vorrichtung angeordnet. Die Vorrichtung verkippt dadurch vorteilhaft während des Verfahrvorganges nicht. Das Manipulationssystem ist vorzugsweise motorgetrieben. Die von der Vorrichtung ausgesandten Ultraschallschüsse werden nach der Rückkehr der Signale empfangen und ausgewertet.

Besonders bevorzugt kann ein aus der Tauchtechnik bekannter fokussierter Prüfkopf in das Adapterelement eingebaut werden. Vorzugsweise ist das Adapterelement als Hülse gebildet. Dieses ist vorzugsweise federnd in einem Grundkörper der Vorrichtung gelagert oder gehaltert. Dadurch tritt keine Zerstörung der Vorrichtung bei dem Meßvorgang, also dem Andrücken an das zu prüfende Baute bzw. den Probekörper auf.

Zwischen einer Prüfkopflinse und der stirnseitigen Wandung des Adapterelementes ist ein Raum gebildet, der mit der ruhenden Flüssigkeit, insbesondere einer Koppelflüssigkeit, luftblasenfrei gefüllt ist.

Wenn das Adapterelement besonders bevorzugt über einen Wasserfilm oder einen Flüssigkeitsfilm an das zu prüfende Bauteil bzw. den Probekörper angekoppelt wird, wird vorzugsweise der Grundkörper der Vorrichtung mit Anschlußmitteln versehen, die mit einem Vorratsbehältnis mit Koppelflüssigkeit verbindbar oder verbunden sind. Das zum Erzeugen des Flüssigkeits- oder Wasserfilmes im Bereich der stirnseitigen Ankoppelfläche des Adapterelementes an das zu prüfende Bauteil bzw. den Probekörper ist das Anschlußmittel, das als Anschlußröhrchen geformt ist.

Zudem sind Pump- und Absaugmittel vorgesehen, die die Koppelflüssigkeit in den Grundkörper hineinpumpen und aus diesem wieder absaugen. Vorzugsweise ist nämlich ein geschlossener Flüssigkeitskreislauf vorgesehen. Durch das eine Anschlußröhrchen wird dabei die Flüssigkeit in den Grundkörper hineingepumpt, also auch in das Adapterelement, wohingegen aus dem zweiten Anschlußröhrchen die Flüssigkeit wieder aus dem Grundkörper abgesogen wird und zurück in das Vorratsbehältnis gelangt. Alternativ zu einem geschlossenen Flüssigkeitskreislauf können auch zwei oder mehr Flüssigkeitskreisläufe vorgesehen werden. Insbesondere kann ein Pumpkreislauf zum Versorgen mit Flüssigkeit sowie ein Absaugkreislauf zum Absaugen der Flüssigkeit aus dem Grundkörper vorgesehen werden.

Besonders vorteilhaft läßt sich die erfindungsgemäße Vorrichtung über einen Wasserfilm leicht an das zu prüfende Bauteil bzw. den Probekörper ankoppeln. Besonders vorteilhaft kann die erfindungsgemäße Vorrichtung bei Vor-Ort-Inspektionen an Flugzeugen oder Hubschraubern eingesetzt werden. Insbesondere kann die erfindungsgemäße Vorrichtung bei der Detektion von Fehlstellen in Faserbundwerkstoffen, wie z.B. CFK-Werkstoffen, besonders vorteilhaft eingesetzt werden, insbesondere zur besseren Prüfung an realen Flugzeugstrukturen.

Zur näheren Erläuterung der Erfindung werden im folgenden zwei Ausführungsbeispiele anhand der Zeichnung beschrieben. Diese zeigen in:
- Figur 1: eine Schnittansicht einer ersten Ausführungsform einer erfindungsgemäßen Vorrichtung zur Ultraschallprüfung;
- Figur 2: eine Schnittansicht einer zweiten Ausführungsform einer erfindungsgemäßen Vorrichtung zur Ultraschallprüfung.

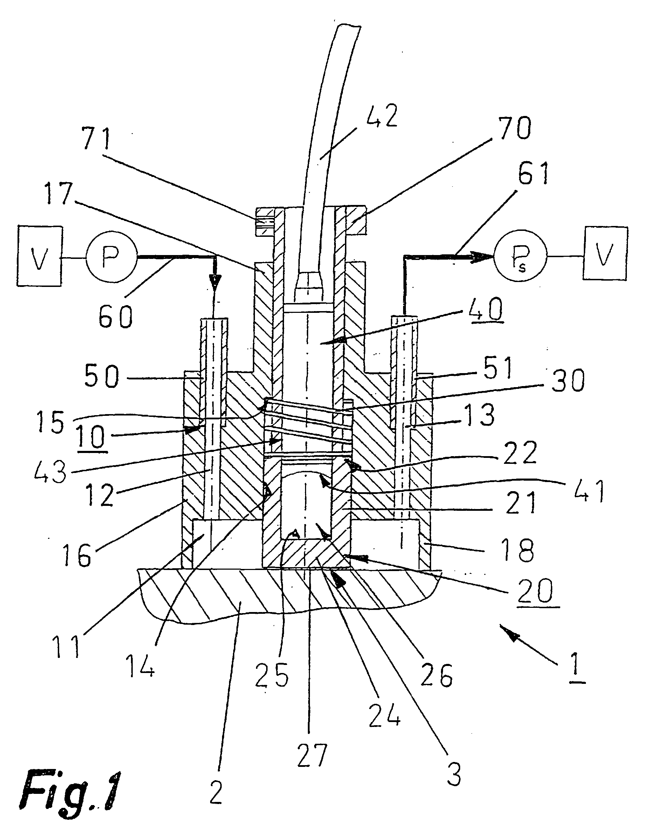

In **Figur 1** ist eine erfindungsgemäße Vorrichtung 1 zur Ultraschallprüfung an einem Probekörper 2 dargestellt. Die Vorrichtung 1 ist an den Probekörper 2 über einen Flüssigkeitsfilm 3 angekoppelt.

Die Vorrichtung 1 weist einen einteiligen Grundkörper 10 auf. Dieser ist aus einem Rumpfteil 16 und einem schmaleren rückwärtigen Teil 17 aufgebaut. In dem Rumpfteil 16 sind im Bereich des äußeren Randes Bohrungen 12, 13 und auf seiner Vorderseite eine Ausnehmung 11 vorgesehen. Des weiteren ist der Grundkörper im Bereich seines Rumpfteiles 16 und seines rückwärtigen Teils 17 mit einer zentralen Durchgangsbohrung 14 versehen. Diese weist im Bereich des Rumpfteiles einen Absatz 15 auf, wobei der schmalere Teil der zentralen Durchgangsbohrung 14 im wesentlichen in dem Teilbereich 17 verläuft.

In diese zentrale Durchgangsbohrung 14 ist ein Adapterelement 20 eingefügt. Dieses weist eine hülsenförmige Wandung 21 auf. Es ragt mit seiner Längserstreckung über das innere Ende der Ausnehmung 11 in dem vorderen Bereich des Grundkörpers 10 hinaus. Das hinausragende Teil bildet eine Frontwandung 24, durch welche das Adapterelement 20 nach vorne abgeschlossen wird. Im Innern des Adapterelementes entsteht dadurch ein Innenraum.

Die hülsenförmige Wandung 21 des Adapterelementes 20 weist einen Absatz 22 auf, der ein dickeres vorderes und ein dünneres hinteres Ende bildet. Auf dem Absatz 22 und unter dem Absatz 15 des Grundkörpers stützt sich ein Federelement 30 in Form einer Druckfeder ab. Dadurch ist das Adapterelement federnd in dem Grundkörper gelagert, was sich insbesondere beim Ankoppeln der Vorrichtung vorteilhaft bemerkbar macht, dadurch, daß eine optimale Anpassung an die Oberflächenform des Probekörpers 2 erfolgen kann.

Innerhalb des Adapterelementes 20 ist ein Prüfkopf 40 vorgesehen. Dieser ist vorzugsweise mit einem gekrümmten Schwinger oder einer anderen Fokussierungseinrichtung versehen. Der Prüfkopf kann innerhalb des Adapterelementes verschoben werden, damit die Fokussierung des Schallfeldes in den Prüfbereich des Werkstückes bzw. Probekörpers 2 justiert werden kann.

Zwischen dem gekrümmten Schallaustritt 41 des Prüfkopfes 40 und der Oberfläche 25 der Frontwandung 24 des Adapterelementes 20 verbleibt ein Raum 26, der luftblasenfrei mit einer ruhenden Koppelflüssigkeit oder einem Koppelmittel gefüllt ist. Dieses gelangt in Abhängigkeit von der Justierung des Prüfkopfes auch in den Spaltraum 43 zwischen Prüfkopf 40 und Innenwandung des Adapterelementes.

Zur akustischen Ankopplung des Adapterelementes 20 an den zu prüfenden Probekörper 2 dient der Flüssigkeitsfilm 3.

Die Koppelflüssigkeit gelangt durch Anschlußröhrchen 50, welches innerhalb der Bohrung 12 des Grundkörpers 10 eingefügt ist, in den Grundkörper hinein und in die Ausnehmung 11. Das Anschlußröhrchen 50 kann in die Bohrung 12 beispielsweise eingeklebt sein. Aus dem Grundkörper 10 gelangt die Koppelflüssigkeit durch die Bohrung 13 über ein darin eingefügtes Anschlußröhrchen 51 wieder heraus. Auch das Anschlußröhrchen 51 kann in den Grundkörper eingeklebt sein.

Die Flüssigkeitszufuhr 60 geschieht aus einem Vorratsbehältnis V über eine entsprechend ausgelegte Pumpe P. Die Flüssigkeitsabfuhr 61 geschieht über eine entsprechend ausgelegte Saugpumpe Pₛ in ein entsprechendes Vorratsbehältnis V. Die beiden Vorratsbehältnisse sind vorzugsweise lediglich ein Vorratsbehältnis, wodurch ein geschlossener Kreislauf entsteht. Sie können aber auch zwei verschiedene Vorratsbehältnisse sein. Dadurch entstünde ein zweigeteilter Kreislauf.

Um das Adapterelement 20 hinsichtlich des Rückfederweges des Grundkörpes justieren zu können bzw. ebenso, um eine feste Verbindung mit dem Grundkörper 10 zu schaffen, wird dessen rückwärtiger Teilbereich 17 durch einen Stellring 70 in diesem Bereich ergänzt. Zum Befestigen des Stellringes 70 an der hülsenförmigen Wandung 21 des Adapterelementes 20 sind Stiftschrauben 71 vorgesehen. Eine davon ist in Figur 1 zu sehen.

Die aus dem Vorratsbehältnis V über die Pumpe P, das Anschlußröhrchen 50, die Bohrung 12 in die Ausnehmung 11 gelangte Flüssigkeit wird vorteilhaft erst nach dem Aufsetzen der Vorrichtung 1 auf der Oberfläche des Probekörpers 2 dorthin gepumpt. Es entsteht dadurch der für die Ultraschallmessung wichtige Flüssigkeitsfilm 3 zwischen der Oberfläche des Probekörpers und der Stirnseitenfläche 27 der Frontwandung 24 der Vorrichtung 1. Diese ist insbesondere aus Plexiglas hergestellt oder aus einem geeigneten anderen durchsichtigen oder durchscheinenden Material.

Ist der Prüfvorgang abgeschlossen, wird vor dem Abnehmen der Vorrichtung von der Oberfläche des Probekörpers wiederum über die Ausnehmung 11, die Bohrung 13, das Anschlußröhrchen 51, die Saugpumpe Pₛ in das Vorratsbehältnis V die Koppelflüssigkeit abgepumpt. Erst nachdem sich in der Ausnehmung 11 keine Flüssigkeit mehr befindet, wird die Vorrichtung ohne Flüssigkeitsverlust wieder von der Oberfläche des Probekörpers entfernt. Da die ruhende Flüssigkeit im Raum 26 keinen Pumpvorgang erfährt, ist sie luftblasenfrei und dadurch für präzise Messungen vorteilhaft geeignet anwendbar.

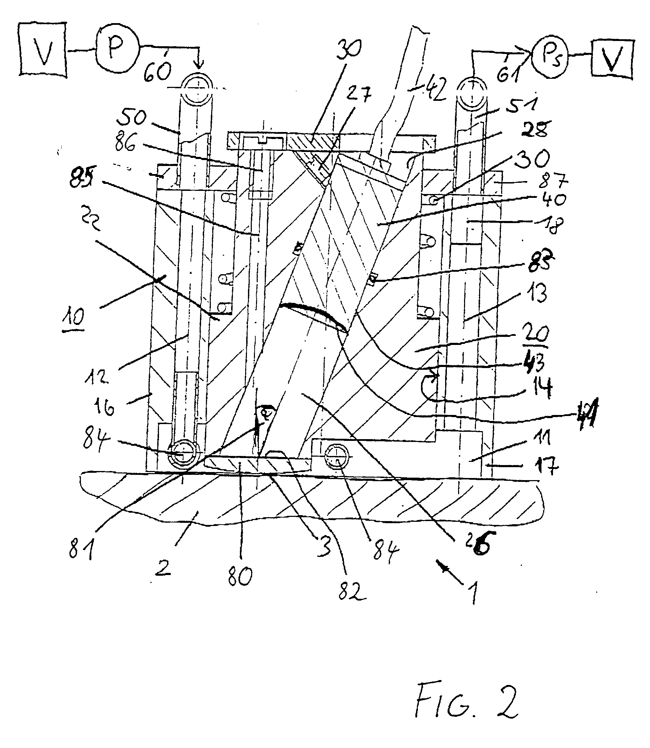

In **Figur 2** ist eine andere Ausführungsform einer erfindungsgemäßen Vorrichtung 1 zur Ultraschallprüfung an einem Probekörper 2 dargestellt. Die Vorrichtung 1 ist an den Probekörper 2 über einen Flüssigkeitsfilm 3 angekoppelt. Auch im folgenden sind bei gleichen oder korrespondierenden Bandelementen gleiche Bezugszeichen verwendet.

Die Vorrichtung 1 weist einen einteiligen Grundkörper 10 auf. In einem Rumpfteil 16 des Grundkörpers 10 sind im Bereich des äußeren Randes Bohrungen 12, 13 und auf seiner Vorderseite eine Ausnehmung 11 vorgesehen. Desweiteren ist der Grundkörper im Bereich seines Rumpfteiles 16 mit einer zentralen Durchgangsbohrung 14 versehen.

In diese zentrale Durchgangsbohrung 14 ist ein Adapterelement, hier ein Winkeladapterelement, eingefügt. Es ragt mit seiner Längserstreckung über das innere Ende der Ausnehmung 11 in dem vorderen Bereich des Grundkörpers 10 hinaus. Das hinausragende Teil ist mit einer Kontaktplatte 80 versehen, durch welche das Adapterelement 20 nach vorne abgeschlossen wird. Im Innern des Adapterelementes entsteht dadurch ein Innenraum.

Die hülsenformige Wandung 21 des Adapterelementes 20 weist einen Absatz 22 auf, der ein dickeres vorderes und ein dünneres hinteres Ende bildet. Auf dem Absatz 22 und unter der Deckplatte 40 des Grundkörpers stützt sich ein Federelement 26 in Form einer Druckfeder ab. Dadurch ist das Adapterelement federnd in dem Grundkörper gelagert, was sich insbesondere beim Ankoppeln der Vorrichtung vorteilhaft bemerkbar macht, dadurch, daß eine optimale Anpassung an die Oberflächenform des Probekörpers 2 erfolgen kann.

Dieses enthält eine zylindrische Bohrung 28, die entsprechend dem gewünschten Einschallwinkel in den Probekörper 2 einen von 90° abweichenden Winkel α aufweist. Dieser ist mit dem Bezugszeichen 81 vermerkt.

Innerhalb des Adapterelementes 20 ist ein Prüfkopf 40 vorgesehen. Dieser ist vorzugsweise mit einem gekrümmten Schwinger oder einer anderen Fokussierungseinrichtung versehen. Der Prüfkopf kann innerhalb des Adapterelementes verschoben werden, damit die Fokussierung des Schallfeldes in den Prüfbereich des Werkstückes bzw. Probekörpers 2 justiert werden kann.

Zwischen dem gekrümmten Schallaustritt 41 des Prüfkopfes 40 und der Oberfläche 82 der Kontaktplatte 80 des Adapterelementes 20 verbleibt ein Raum 26, der luftblasenfrei mit einer ruhenden Koppelflüssigkeit oder einem Koppelmittel gefüllt ist. Dieses gelangt in Abhängigkeit von der Justierung des Prüfkopfes auch in den Spaltraum 43 zwischen Prüfkopf 40 und Innenwandung des Adapterelementes. Die Koppelflüssigkeit wird über einen 0-Ring 83 zur oberen Seite der Bohrung 14 abgedichtet.

Zur akustischen Ankopplung des Adapterelementes 20 mit der Kontaktplatte 80 an den zu prüfenden Probekörper 2 dient der Flüssigkeitsfilm 3.

Die Koppelflüssigkeit gelangt durch ein Anschlußröhrchen 50, welches innerhalb der Bohrung 12 des Grundkörpers 10 eingefügt ist, in eine Ringdüse hinein und wird an die Kontaktplatte 80 gespritzt. Das Wasser sammelt sich dann in der Ausnehmnung. Das Anschlußröhrchen 50 kann in die Bohrung 12 beispielsweise eingeklebt sein. Aus dem Grundkörper 10 gelangt die Koppelflüssigkeit durch die Bohrung 13 über ein darin eingefügtes Anschlußröhrchen 51 wieder heraus. Auch das Anschlußröhrchen kann in den Grundkörper eingeklebt sein.

Die Flüssigkeitszufuhr 60 geschieht aus einem Vorratsbehältnis V über eine entsprechend ausgelegte Pumpe P. Die Flüssigkeitsabfuhr 61 geschieht über eine entsprechend ausgelegte Saugpumpe Pₛ in ein entsprechendes Vorratsbehältnis V. Die beiden Vorratsbehältnisse sind vorzugsweise lediglich ein Vorratsbehältnis, wodurch ein geschlossener Kreislauf entsteht. Sie können aber auch zwei verschiedene Vorratsbehältnisse sein. Dadurch entstünde ein zweigeteilter Kreislauf.

Die aus dem Vorratsbehältnis V über die Pumpe P, das Anschlußröhrchen 50, die Bohrung 12 und die ringförmige Leitung 84 bzw. Ringdüse in die Ausnehmung 11 gelangte Flüssigkeit wird vorteilhaft erst nach dem Aufsetzen der Vorrichtung 1 auf der Oberfläche des Probekörpers 2 dorthin gepumpt. Es entsteht dadurch der für die Ultraschallmessung wichtige Flüssigkeitsfilm 3 zwischen der Oberfläche des Probekörpers und der Stirnseitenfläche 27 der Frontwandung 24 der Vorrichtung 1. Diese ist insbesondere aus Plexiglas hergestellt oder aus einem geeigneten anderen durchsichtigen oder durchscheinenden Material.

Vorgesehen ist ferner eine Entlüftungsbohrung 85, die mit einer Verschlußschraube 86 verschlossen werden kann. Dadurch kann bei der Belüftung des Raumes um die Kontaktplatte 80 die dort befindliche Luft entweichen. Außerdem hält eine Deckelplatte 87 das Federelement 30 und deckt den Adapter nach oben ab.

Ist der Prüfvorgang abgeschlossen, wird vor dem Abnehmen der Vorrichtung von der Oberfläche des Probekörpers wiederum über die Ausnehmung 11, die Bohrung 13, das Anschlußröhrchen 51, die Saugpumpe Pₛ in das Vorratsbehältnis V die Koppelflüssigkeit abgepumpt. Erst nachdem sich in der Ausnehmung 11 keine Flüssigkeit mehr befindet, wird die Vorrichtung ohne Flüssigkeitsverlust wieder von der Oberfläche des Probekörpers entfernt. Da die ruhende Flüssigkeit im Raum 26 keinen Pumpvorgang erfährt, ist sie luftblasenfrei und dadurch für präzise Messungen vorteilhaft geeignet anwendbar.

### Bezugszeichenliste

- 1: Vorrichtung
- 2: Bauteil, Probekörper
- 3: Flüssigkeitsfilm
- 10: Grundkörper
- 11: Ausnehmung
- 12: Bohrung
- 13: Bohrung
- 14: zentrale Durchgangsbohrung
- 15: Absatz
- 16: Rumpfteil des Grundkörpers
- 17: rückwärtiges Teil des Grundkörpers
- 18: Wandung des Grundkörpers
- 20: Adapterelement
- 21: hülsenförmige Wandung
- 22: Absatz
- 24: Frontwandung
- 25: Oberfläche
- 26: Raum mit Koppelflüssigkeit (ruhend)
- 27: Stirnseitenfläche
- 28: Zylindrische Bohrung
- 30: Federelement (Druckfeder)
- 40: Prüfkopf
- 41: Schallaustritt des Prüfkopfes (gekrümmt)
- 42: Prüfkopf-Anschlußkabel
- 43: Spaltraum
- 50: Anschlußröhrchen
- 51: Anschlußröhrchen
- 60: Flüssigkeitszufuhr
- 61: Flüssigkeitsabfuhr
- 70: Stellring
- 71: Stiftschraube
- 80: Kontaktplatte
- 81: Winkel, Einstrahlwinkel
- 82: Oberfläche der Kontaktplatte
- 83: O-Ring
- 84: ringförmige Leitung
- 85: Entlüftungsbohrung
- 86: Verschlußschraube
- 87: Deckelplatte
- Pₛ: Saugpumpe
- P: Pumpe
- V: Vorratsbehältnis

## Patentansprüche

1. Vorrichtung zur Ultraschallprüfung an Probekörpern mit einem Prüfkopf, bei dem der Prüfkopf (40) in einem Adapterelement (20) angeordnet ist, das mit einer ruhenden Flüssigkeit gefüllt ist und über einen Flüssigkeitsfilm (3) an den Probekörper (2) ankoppelbar ist.

2. Vorrichtung nach Anspruch 1,
**dadurch gekennzeichnet,**
**daß** das Adapterelement (20) so ausgebildet ist, daß die Schallabstrahlung in einem von 90°-(Senkrecht-)Einstrahlung abweichenden Winkel in den Probekörper (2) erfolgt.

3. Vorrichtung nach Anspruch 1 oder Anspruch 2,
**dadurch gekennzeichnet,**
**daß** die Zufuhr der Flüssigkeit zum Flüssigkeitsfilm über eine den Einstrahlbereich ringförmig umgehende Leitung mit mehreren Düsen erfolgt.

4. Vorrichtung nach Anspruch 3,
**dadurch gekennzeichnet,**
**daß** die ringförmige Leitung mindestens vier symmetrisch angeordnete Düsen aufweist.

5. Vorrichtung nach einem der Ansprüche,
**dadurch gekennzeichnet,**
**daß** das Adapterelement eine stirnseitige Ankoppelfläche (27) zum Ankoppeln an dem Probekörper (2) aufweist.

6. Vorrichtung nach einem der Ansprüche,
**dadurch gekennzeichnet,**
**daß** die Ankoppelfäche im wesentlichen eben ist oder einen Krümmungsradius aufweist, der im wesentlichen dem des Probekörpers (2) angepaßt ist.

7. Vorrichtung nach einem der vorstehenden Ansprüche,
**dadurch gekennzeichnet,**
**daß** der Prüfkopf einen fokussierten Teil (41) aufweist.

8. Vorrichtung nach einem der vorstehenden Ansprüche,
**dadurch gekennzeichnet,**
**daß** das Adapterelement in einem Grundkörper (10) der Vorrichtung (1) federnd gehaltert ist.

9. Vorrichtung nach einem der vorstehenden Ansprüche,
**dadurch gekennzeichnet,**
**daß** Anschlußmittel (50, 51) an dem Grundkörper vorgesehen sind, die mit einem Vorratsbehältnis mit Koppelflüssigkeit verbindbar oder verbunden sind.

10. Vorrichtung nach Anspruch 9,
**dadurch gekennzeichnet,**
**daß** Pump- und Absaugmittel vorgesehen sind, die die Koppelflüssigkeit in den Grundkörper hineinpumpen und aus diesem wieder absaugen.

11. Vorrichtung nach Anspruch 9 oder 10,
**dadurch gekennzeichnet,**
**daß** ein geschlossener Flüssigkeitskreislauf vorgesehen ist.

12. Vorrichtung nach einem der vohergehenden Ansprüche,
**dadurch gekennzeichnet,**
**daß** die Vorrichtung (1) durch eine mehrfachgelenkige Befestigungseinrichtung an einem Manipulationssystem zum Bewegen oder Manipulieren der Vorrichtung befestigt ist.

13. Vorrichtung nach Anspruch 12,
**dadurch gekennzeichnet,**
**daß** die mehrfachgelenkige Befestigungseinrichtung eine kardanische ist.
